# EUROPEAN PATENT SPECIFICATION

(11) **EP 1 432 212 B1**
(45) Date of publication and mention of the grant of the patent: **23.08.2006**
(21) Application number: 03104788.9
(22) Date of filing: 18.12.2003
(51) Int. Cl.: H04L 29/08, H04L 12/28

(54) **A method and a system for wirelessly transferring an electronic service to a terminal**
Verfahren und System für die drahtlose Übertragung eines elektronischen Dienstes zu einem Endgerät
Procédé et système de transfert sans fil d'un service électronique vers un terminal

(30) Priority: 19.12.2002 FI 20022240
(43) Date of publication of application: 23.06.2004
(73) Proprietor: TeliaSonera Finland Oyj, 00510 Helsinki (FI)
(72) Inventor: Tuomela, Frans, 00640, Helsinki (FI); Väänänen, Kai, 02940, Espoo (FI)
(74) Representative: Rönkkö, Taina Mirjam

(56) References cited:
- EP-A- 1 207 656
- WO-A-01/89155
- WO-A-02/063900
- "Universal Mobile telecommunications system (UMTS);IP Multimedia Subsystem (IMS); Stage 2 (3GPP TS 23.228 version 5.4.1 Release 5)" ETSI TS 123 228 V5.4.1, XX, XX, April 2002 (2002-04), pages 1-149, XP002223358

## Description

The present invention relates to a method for transferring an electronic service via a first wireless data transfer network to a terminal in a second wireless data transfer network, as presented in the preamble of claim 1. In addition, the invention relates to a system for transferring an electronic service, as presented in the preamble of claim 11, which system comprises a first wireless data transfer network, a second wireless data transfer network, as well as a terminal, which is arranged in data transfer connection with said first and second data transfer networks.

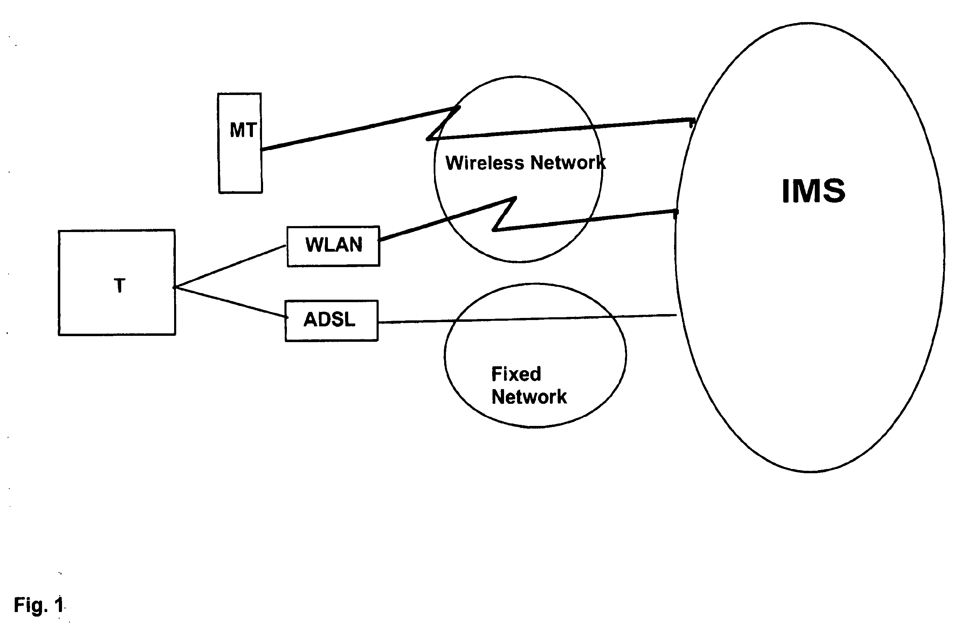

The so-called third generation mobile communication network, UMTS (Universal Mobile Telecommunications Systems), makes it possible to offer new services between different terminals by means of IP addresses. The IP-based multimedia system (IMS, IP Multimedia Subsystem) is a platform developed for multimedia services, which makes it possible to uniformly process different forms of data, as well as data transfer between different networks (for example a mobile communication network and the Internet). Fig. 1 presents the independence of the IMS network from access technologies, where there is an access from a wireless terrrinal MT as well as a terminal T to the IMS network either via a wireless network or a fixed network. The terminal T forms a connection either via an ADSL interface or by using, for example, a network card (WLAN) in order to form a wireless connection. From the user's point of view, the access to the IMS network from the terminal T (for example a laptop computer or a PC) is as easy as from the wireless terminal MT.

The IMS system is based on a home and a visiting network architecture. In this type of architecture the term home network refers to a network where the data and the home services of the user are located. The visiting network, for its part, makes mobility and connections possible. In other words, the main task of a visiting network is to offer the subscriber a mobile connection to his/her home network. As a result of this, subscribers are continuously in a visiting network, but the connection setup is handled via their home network.

Each registered IMS user has a private user identity, which the home network operator allocates and which is used, for example, in customer identification, registration, control and billing. This user identity is used only within the home network to identify the user; it is not used in routing SIP messages. The user identity is permanent information on the user and it is valid as long as the user is a customer of the home network operator. In addition to the private user identity, the user has public user identities, of which there can be one or more. This public user identity is of the form SIP-URL (SIP:user@home.fi) or E.164 number (1234567) and by means of it other users can identify the customer and contact him/her.

SIP-URLs are used in transmitting contacts, because contact formation is based on a SIP protocol (Session Initiation Protocol). SIP is a protocol developed for a packet switched IP network, by means of which an interactive and real time connection can be formed between users. The SIP protocol makes it possible for two different and/or similar terminals to communicate.

As was presented above, it is possible to connect different access technologies to the IMS network (depending on the terminal). For example, the access technologies of Bluetooth, Wireless Local Area Network (WLAN) or Infrared (Infrared Data Association, IrDA) form a short-range transfer network, whose core is a base station (hotspot). In the description, the established term *hotspot* is used to refer to the base station in question, to an active point, around which a short-range transfer network is formed. Therefore, *hotspot provider* refers to a service provider, who controls the base station in question. When the hotspot provider has formed a customer connection with a network operator, the registered users of the network operator have access to the data networks of different services via the hotspot in question.

When connecting different access technologies to, for example, an IMS network, offering a service by means of some other access technology than the one in question may become a problem. This type of service offering is current indeed in the IP-based services of the UMTS network. As the application field is still new, no solutions have been made to the problem. The electronic bulletin boards or the like that are used are based on a different interface. Thus, a service offered by the base station is selected from a wireless terminal, which service request is answered along the same request route, without third parties.

Publication WO 01/89155A1 presents a way to transfer digital data to a mobile phone. In the method according to the publication, the terminal is in communication with an electronic shop (the www-pages of the shop), from where it is possible for him/her to download "purchases", such as game files etc. to his/her own terminal. The choice of the data link used for data transfer is based on a report, which states how long the file download will take and how much the download will cost. An alternative is to use the mobile communication network or to download a file directly by using a hotspot base station. In the publication, the network operator must recognize the location of the hotspot base station of the service provider in order for the data transfer to be possible.

In the publication, the user of the terminal contacts the server of the electronic shop. In order to receive the desired digital product, the user propagates to the location of the hotspot. The user may browse and buy other products while in the hotspot network. Both the hotspot network as well as the server of the electronic shop are connected to one or more content providers, and in addition, they receive the digital product to be sold and downloaded to the customer's terminal. The hotspot network administers the order reception module and the load module, while the electronic shop server uses the order module and the order/location module in order to receive an order, to download a digital product and to guide the user (buyer) to the hotspot network, where the product in question can be downloaded.

Publication WO-A-02063900 discloses an access system for providing an access to a second access network, e.g. UMTS via a first access network, which is not designed to be used as a part of the second access network. When a terminal comes to the coverage area of the first access network from where connection to second access network is available, the terminal establishes a connection with an access point. After the connection establishment to the access point, an IP address is allocated to the terminal. And the second access network information is delivered from first access network gateway to terminal. After establishment of the IP connection it is maintained as long as the terminal is within the coverage of the access point of the first network. The first access network may be based on non-licensed technology in such fashion that it may be shared by e.g. different second access network operators to provide access to their second access networks.

The purpose of the present invention is to enable an easier service providing in such an environment, which is not administered by the network operator of the user. The idea of the invention is that the electronic service is transmitted from the server subscriber-specifically to the wireless terminal of the user via a base station, in which case the hotspot service provider does not need to have a contract with the (IMS) network operator beforehand, but only an Internet connection. The relationship between the operator and the customer can, however, be utilized, for example, in billing and in identification (e.g. for service constraints). By means of the invention, the hotspot-type services can be implemented with the same service request.

To put it more precisely, the method according to the present invention is primarily characterized in that in the method for transferring an electronic service to a terminal an identity data of a base station (BT) of the first wireless data transfer network is transmitted to the terminal, a request for a service comprising the identity data is sent from the terminal to the second wireless data transfer network, a data transfer connection is formed by means of the second wireless data transfer network from a server for a backbone network to the terminal via the first wireless data transfer network, a test message is transferred to the terminal via a temporary test connection formed within said data transfer connection in order to ensure the functionality of the data transfer connection, after which the data transfer connection thus ensured is used for transferring the service, said data transfer connection is used temporarily to transfer the service to the terminal, after which the data transfer connection is terminated. In addition, the system according to the present invention is primarily characterized in that a base station of the first wireless data transfer network is capable of transmitting its identity data to the terminal, the terminal is capable of sending a request for a service comprising the identity data to the second wireless data transfer network, the second wireless data transfer network is capable of forming a data transfer connection from a server for a backbone network to the terminal via the first wireless data transfer network, the second wireless data transfer network is arranged to test the functionality of the data transfer connection before the service is transferred to the terminal, by transferring a test message to the terminal via a temporary test connection formed within said data transfer connection wherein the system is capable of using said data transfer connection temporarily to transfer a service to the terminal, and to terminate the data transfer connection when the service has been transferred.

The method according to the invention provides a faster and more sensible data transfer channel for transmitting an electronic service (e.g. an IP service). Because in the environment administered by the network operator (IMS) the subscriber has already been identified, he/she can be billed without a new identification. With the IMS, no more transfer capacity enters the mobile communication network, which is why certain services can be distributed faster in the hotspot areas, thanks to the invention. This improves the user's situation in receiving the order as well as in the pricing of the transfer. In addition, service providing takes place more cost-efficiently, which, for its part, is important to the operator.

In addition, thanks to the invention, the hotspot base station of the service provided does not need to be visible to the (e.g. IMS) network operator otherwise than as a general network address (e.g. an IP address), because a server storing the electronic service is activated from the subscriber's home network, as well as the corresponding hotspot base station to deliver the desired electronic service. The hotspot base station can deliver the service, because the billing information of the subscriber is already known as the registered user of the home network. The network operator and the hotspot base station of the service provider are both connected to the Internet, which administers a domain name service (DNS), through which the general network address of the service provider can be detected when a request for the network in question is received.

Further, the independence from each other for the hotspot service provider and the network operator is achieved with the method according to the invention. The parties in question do thus not have to be in a regular customer relationship with each other, but new service providers are within easier access. Because of this, the end customer receives better service, because the reception of the necessary data becomes faster and more effortless. In addition, a number of new services are formed within the reach of the end customer when the possibilities of the network operator for the availability of new service environments are improved.

The present invention will be described in more detail with reference to the following drawings, in which
- Fig. 1: shows the independency of the IMS network from different access technologies, and
- Fig. 2: presents one advantageous embodiment of the method according to the invention for providing an electronic service, and
- Fig. 3: presents a signalling chart of an embodiment according to Fig. 2.

Before a more detailed description of the invention, it is to be noted that in the description an IMS network environment is described as the network environment/network operator, but it can also be some other network environment implemented for the purpose, which connects local area networks to a general data network for sending multimedia messages or the like independently of terminal type. The IMS network environment comprises, in a known way, other elements than the ones described in this description. Such elements, whose operation is known as such to a man skilled in the art and whose operation does not substantially change with the embodiment of the invention, are left out of the description. Further, an UMTS network is described as the mobile communication network in the description, but it can also be some other network, whose technical properties cover the functionality of the UMTS network either partly or entirely.

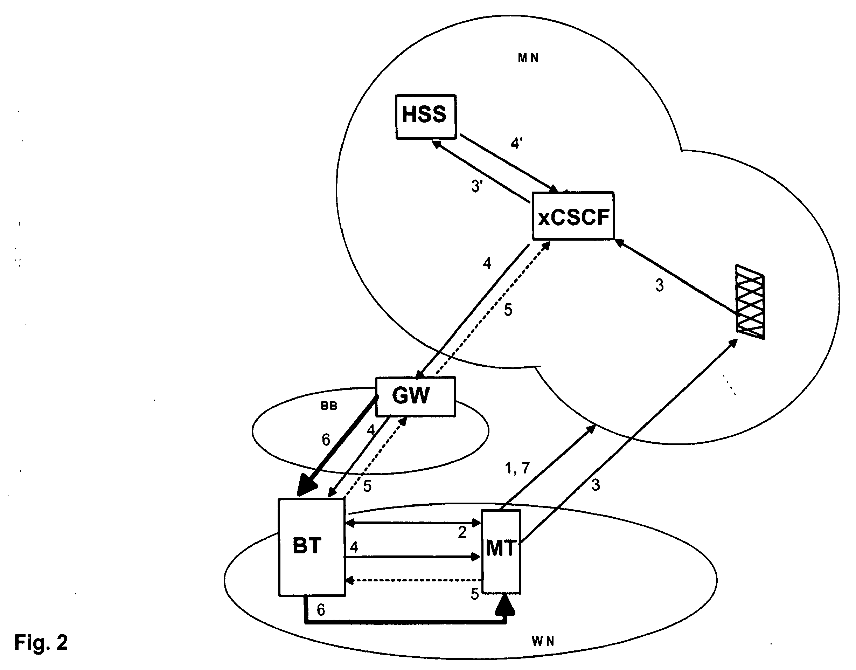

Fig. 2 shows a first wireless data transfer network WN, a second wireless data transfer network MN, as well as a backbone network BB. The first wireless data transfer network WN is advantageously a short-range network (hotspot), the second wireless data transfer network MN is advantageously a mobile communication network, e.g. a GPRS or UMTS network, which further comprises an IMS system (IMS). The backbone network BB is advantageously a general data network connection, such as the Internet. The elements operating in the IMS system are known to a man skilled in the art, and of them, the home subscriber server HSS developed from the home location register (HLR) and the authentication center (AUC), as well as the call/session control functions (CSCF) are substantial in view of the invention.

The home server HSS controls the user's subscriber profile in the home network and known which core network node the user is in at a certain time. It also supports the authentication and authorization (AAA) function of the subscriber. In addition, HSS comprises information on the ordered services.

I-CSCF, P-CSCF and S-CSCF are the call/session control functions of the IMS network. Of these, the proxy server P-CSCF (Proxy-CSCF) controls the messages between the mobile communication device and the home network. The I-CSCF (Interrogating-CSCF), for its part, forms an access to the home network, at the same time hiding the inner structure of the home network from other networks. All the sessions addressed to the home network subscriber are received first in the I-CSCF, which directs the requests to the data controller (S-CSCF, Serving-CSCF). The SCSCF performs session control services for the user device. User registration and identifying registered users takes place in the S-CSCF, which also handles the session control on behalf of the registered users. For simplification, the element xCSCF of Fig. 2 comprises all the above-mentioned CSCF elements (P-CSCF, I-CSCF, S-CSCF), because they function in the method according to the invention in a manner known as such and therefore are not considered an inventive idea. A gateway/server GW functions as the interface of the IMS network to the Internet.

The base station BT and the wireless terminal MT operate in the hotspot network WN. The base station BT can be any base station that can form a data transfer connection with the terminal MT. Advantageously, a Bluetooth station is this type of a base station, but it can also be a base station of a wireless local area network (WLAN) or an infrared connection device (IrDA). In addition, the hotspot provider is connected to a general data network, such as the Internet.

The terminal MT utilizing the method according to the invention is such that it is recognizable to the outside by means of an individual network address (IP address) used in a general data network. In addition to this, the terminal MT must comprise access technologies both to the mobile communication network MN in use, such as e.g. UMTS, as well as to a hotspot base station with some known wireless method, such as Bluetooth, WLAN or IrDA. The terminal MT can naturally also comprise other functions, such as, for example, mobile communication device functions.

The terminal MT is in the GPRS / UMTS network and registered to the IMS network (1). When arriving in the area of a hotspot network, the terminal MT and the hotspot base station BT signal with each other in a known way and detect each other, in which case a short-range transfer connection (2) is formed between them. Via the data transfer connection the hotspot base station BT can offer a service to the terminal MT, which transferred service can be any service offered with a different transfer technology. The hotspot base station BT transmits its identity data to the terminal MT, advantageously its network address, which can be used in detecting the hotspot base station in question in a general data network. In the case of Internet, the network address is, in a known way, an IP address. At the same time the hotspot base station can send a key to the terminal MT, with which the data connected to the electronic service is sent when providing a service. The use of a key prevents outsiders and/or outside terminals from stealing the data. The key can be agreed in advance and it can be formed of an IP address/port number pair. The method according to the invention can be applied further in connection with several terminals (broadcasting), in which case there are more keys used.

After the contact setup the terminal MT sends (3) a message to the IMS home network, which the user of the terminal MT has registered to and via which the service can be provided. The message indicates the service need of the terminal MT to the home network. In addition, the message comprises the address of the hotspot BT as well as possibly other attributes, known to a man skilled in the art, concerning the desired service or the codec being used. A mobile communication network, advantageously a GPRS / UMTS network is used in sending the network address. If the service desired by the customer so requires, the information concerning the customer can be checked at this point. The checking takes place by performing a query (3', 4') on the home server HSS of the user. In the query the user's public and/or private user identity is used, by means of which the user's information can be retrieved from the home server HSS. Along with the query the customer can be identified and it can be verified that he/she fulfils the conditions associated wi th the service (such as age limits). The check query can be carried out service-specifically.

Before the actual sending of the data to the terminal MT, the proxy xCSCF of the home network performs a connection test (4) to the hotspot base station BT via a general backbone network, such as the Internet or some other IP-based connection network by means of the gateway GW. This connection network does not necessarily have to be secure. The connection test (4) is always performed as far as the terminal MT. When a response (5) is received from the terminal MT via the hotspot base station BT, the proxy xCSCF of the home network is confirmed that the route is functional, in which case the route in question can be used in sending the requested data. After the confirmation, the desired data is transmitted from the server GW via the new, confirmed route (6) to the terminal MT. It is essential to notice that the method according to the invention is not dependent on which radio technology is used for the transfer. The home network proxy xCSCF can gather time or data amount -based information for billing, as well as a transaction payment directly from the mobile communication network, because after the route is confirmed, it is known between whom the data is transferred and whether the data transfer is even possible. The arranged new route (6) is formed temporarily, in which case it only exists during service transfer. After this, the terminal MT can continue communication (7) with the IMS network normally via the mobile communication network connection (GPRS/UMTS).

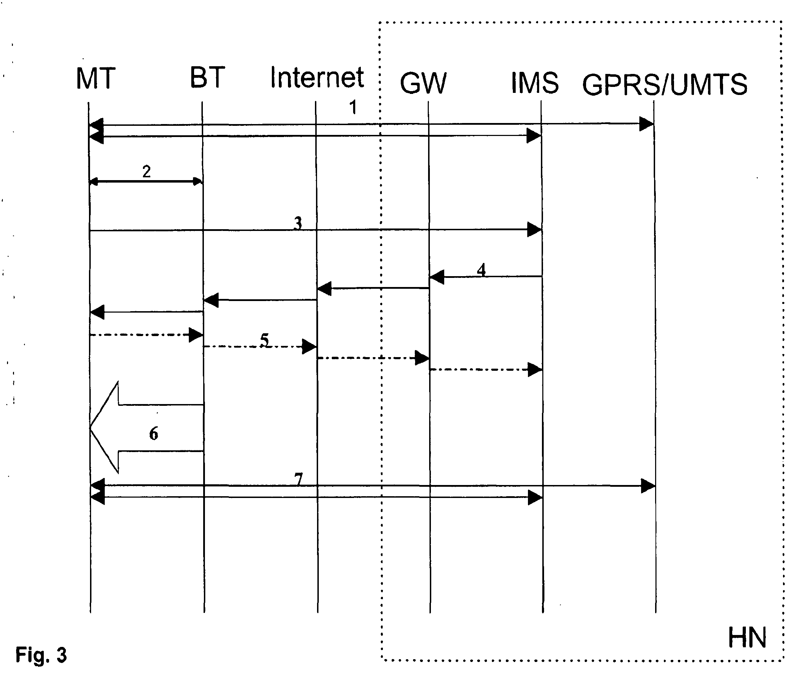

The signalling chart of the above-described example is shown correspondingly in Fig. 3. The outlined area on the right side from the viewer presents the home network HN, which is advantageously formed of the IMS network, of the mobile communication network (GPRS/UMTS), as well as of the gateway GW to the Internet or some other corresponding backbone network.

It is obvious that the above-described is one example of the method according to the invention and he system implementing the method. The elements of the system can vary in a way known to a man skilled in the art, in which case it is substantial to note the function performed by each element. Because of this, the present invention is not limited to the above-presented embodiment, but it can be modified within the scope of the appended claims.

## Claims

1. A method for transferring an electronic service via a first wireless data transfer network (WN) to a terminal (MT) in a second wireless data transfer network (MN) and communicating with the first wireless data transfer network (WN), **characterized in that** in the method
- an identity data of a base station (BT) of the first wireless data transfer network (WN) is transmitted to the terminal (MT),
- a request for a service comprising the identity data is sent from the terminal to the second wireless data transfer network (MN),
- a data transfer connection (4, 6) is formed by means of the second wireless data transfer network (MN) from a server (GW) for a backbone network (BB) to the terminal (MT) via the first (WN) wireless data transfer network,
- a test message is transferred to the terminal (MT) via a temporary test connection (4) formed within said data transfer connection (6) in order to ensure the functionality of the data transfer connection (6), after which the data transfer connection (6) thus ensured is used for transferring the service,
- said data transfer connection (6) is used temporarily to transfer the service to the terminal (MT), after which the data transfer connection (6) is terminated.

2. The method according to claim 1, **characterized in that** the temporary data transfer connection (6) is formed based on said identifier.

3. The method according to claim 2, **characterized in that** said identifier comprises information on the network address of said base station (BT).

4. The method according to any of the claims 1 to 3, **characterized in that** time or data amount based information is gathered via the temporary data transfer connection (6) for billing.

5. The method according to any of the preceding claims, **characterized in that** the first wireless data transfer network (WN) is a short range transfer network.

6. The method according to claim 5, **characterized in that** the short-range transfer network is formed of one of the following: WLAN, Bluetooth or IrDA.

7. The method according to any of the preceding claims, **characterized in that** the second wireless data transfer network (MN) is a mobile communication network.

8. The method according to claim 7, **characterized in that** the mobile communication network is a UMTS or GPRS network.

9. The method according to any of the preceding claims, **characterized in that** the second wireless data transfer network (MN) comprises an IMS system.

10. A system for transferring an electronic service to a terminal (MT), which system comprises a first wireless data transfer network (WN), a second wireless data transfer network (MN) as well as a terminal (MT), which is arranged in connection (1, 2) with said first and second data transfer network, **characterized in that**
- a base station (BT) of the first wireless data transfer network (WN) is capable of transmitting its identity data to the terminal (MT),
- the terminal (MT) is capable of sending a request for a service comprising the identity data to the second wireless data transfer network (MN), wherein
- the second wireless data transfer network (MN) is capable of forming a data transfer connection (4, 6) from a server (GW) for a backbone network (BB) to the terminal (MT) via the first wireless data transfer network (WN),
- the second wireless data transfer network (MN) is arranged to test the functionality of the data transfer connection before the service is transferred to the terminal (MT) by transferring a test message to the therminal (MT) via a temporary test connection (4) formed within said data transfer connection (6),
- the system is capable of using said data transfer connection (6) temporarily to transfer the service to the terminal (MT), and to terminate the data transfer connection when the service has been transferred.

11. The system according to claim 10, **characterized in that** said identifier comprises information on the network address of said base station (BT).

12. The system according to any of the claims 10 or 11, **characterized in that** the second data transfer network (MN) is arranged to gather time or data amount based information via the temporary data transfer connection for billing.

13. The system according to any of the claims 10 to 12, **characterized in that** the first wireless data transfer network (WN) is a short range transfer network.

14. The system according to claim 13, **characterized in that** said short-range transfer network (WN) is one of the following: WLAN, Bluetooth or IrDA.

15. The system according to any of the claims 10 to 14, **characterized in that** the second wireless data transfer network (MN) is a mobile communication network.

16. The system according to claim 15, **characterized in that** the mobile communication network is either an UMTS or a GPRS network.

17. The system according to any of the preceding claims, **characterized in that** the second wireless data transfer network (MN) comprises an IMS network.

18. The system according to any of the preceding claims, **characterized in that** the terminal comprises means for performing mobile communication.

## Patentansprüche

1. Verfahren zum Übertragen eines elektronischen Dienstes über ein erstes drahtloses Datenübertragungsnetzwerk (WN) an ein Terminal (MT), das sich in einem zweiten drahtlosen Datenübertragungsnetzwerk (MN) befindet und mit dem ersten drahtlosen Datenübertragungsnetzwerk (WN) kommuniziert, **dadurch gekennzeichnet, dass** in dem Verfahren:
- Identitätsdaten einer Basisstation (BT) des ersten drahtlosen Datenübertragungsnetzwerkes (WN) an das Terminal (MT) übermittelt werden,
- eine Anforderung für einen Dienst, die die Identitätsdaten aufweist, von dem Terminal zu dem zweiten drahtlosen Datenübertragungsnetzwerk (MN) gesendet wird,
- eine Datenübertragungsverbindung (4, 6) durch das zweite drahtlose Datenübertragungsnetzwerkes (MN) von einem Server (GW) für ein zentrales Netzwerk (BB- backbone network) zu dem Terminal (MT) über das erste drahtlose Datenübertragungsnetzwerk(WN) gebildet wird,
- eine Testnachricht an das Terminal (MT) über eine temporäre Testverbindung (4) übertragen wird, die innerhalb der Datenübertragungsverbindung (6) gebildet wird, um die Funktionalität der Datenübertragungsverbindung (6) sicherzustellen, wonach die derart sichergestellte Datenübertragungsverbindung (6) zum Übertragen des Dienstes verwe n-det wird,
- die Datenübertragungsverbindung (6) temporär zur Übertragung des Dienstes an das Terminal (MT) verwendet wird, wonach die Datenübertragungsverbindung (6) beendet wird.

2. Verfahren nach Anspruch 1, **dadurch gekennzeichnet, dass** die temporäre Datenübertragungsverbindung (6) auf die Identifikation basierend gebildet wird.

3. Verfahren nach Anspruch 2, **dadurch gekennzeichnet, dass** die Identifikation Informationen über die Netzwerkadresse der Basisstation (BT) aufweist.

4. Verfahren nach einem der Ansprüche 1 bis 3, **dadurch gekennzeichnet, dass** eine auf eine Zeit- oder Datenmenge basierende Informationen über die temporäre Datenübertragungsverbindung (6) zum Abrechnen gesammelt wird.

5. Verfahren nach einem der vorstehenden Ansprüche, **dadurch gekennzeichnet, dass** das erste drahtlose Übertragungsnetzwerk (WN) ein Übertragungsnetzwerk für den Nahbereich ist.

6. Verfahren nach Anspruch 5, **dadurch gekennzeichnet, dass** das Übertragungsnetzwerk für den Nahbereich durch eines der folgenden gebildet wird: WLAN, Bluetooth oder IrDA.

7. Verfahren nach einem der vorstehenden Ansprüche, **dadurch gekennzeichnet, dass** das zweite drahtlose Datenübertragungsnetzwerk (MN) ein mobiles Kommunikationsnetzwerk ist.

8. Verfahren nach Anspruch 7, **dadurch gekennzeichnet, dass** das mobile Kommunikationsnetzwerk ein UMTS- oder GPRS-Netzwerk ist.

9. Verfahren nach einem der vorstehenden Ansprüche, **dadurch gekennzeichnet, dass** das zweite drahtlose Übertragungsnetzwerk (MN) ein IMS-System aufweist.

10. System zum Übertragen eines elektronischen Dienstes an ein Terminal (MT), bei dem das System ein erstes drahtloses Datenübertragungsnetzwerk (WN), ein zweites drahtloses Datenübertragungsnetzwerk (MN) sowie ein Terminal (MT) aufweist, welches in Verbindung (1, 2) mit dem ersten und zweiten Datenübertragungsnetzwerk angeordnet ist, **dadurch gekennzeichnet, dass**
- eine Basisstation (BT) des ersten drahtlosen Datenübertragungsnetzwerks (WN) zum Übermitteln ihrer Identitätsdaten an das Terminal (MT) geeignet ist,
- das Terminal (MT) zum Senden einer Anforderung für einen Dienst geeignet ist, die die Identitätsdaten des zweiten drahtlosen Datenübertragungsnetzwerkes (MN) aufweist, wobei
- das zweite drahtlose Datenübertragungsnetzwerk (MN) zum Bilden einer Datenübertragungsverbindung (4, 6) von einem Server (GW) für ein zentrales Netzwerk (BB - backbone network) zu dem Terminal (MT) über das erste drahtlose Datenübertragungsnetzwerk (WN) geeignet ist,
- das zweite drahtlose Datenübertragungsnetzwerk (MN) ausgebildet ist, die Funktionalität der Datenübertragungsverbindung, bevor der Dienst an das Terminal (MT) übertragen wird, durch Übertragen einer Testnachricht an das Terminal (MT) über eine temporäre Testverbindung (4) zu testen, die innerhalb der Datenübertragungsverbindung (6) gebildet ist,
- das System zum temporären Anwenden der Datenübertragungsverbindung (6) geeignet ist, um den Dienst an das Terminal (MT) zu übertragen, und um die Datenübertragungsverbindung zu beenden, wenn der Dienst übertragen worden ist.

11. System nach Anspruch 10, **dadurch gekennzeichnet, dass** die Identifikation Informationen über die Netzwerkadresse der Basisstation (BT) aufweist.

12. System nach einem der Ansprüche 10 oder 11, **dadurch gekennzeichnet, dass** das zweite Datenübertragungsnetzwerk (MN) ausgebildet ist, auf eine Zeit- oder Datenmenge basierende Informationen über die temporäre Date n-übertragungsverbindung zum Abrechnen zu sammeln.

13. System nach einem der Ansprüche 10 bis 12, **dadurch gekennzeichnet, dass** das erste drahtlose Datenübertragungsnetzwerk (WN) ein Übertragungsnetzwerk für den Nahbereich ist.

14. System nach Anspruch 13, **dadurch gekennzeichnet, dass** das Übertragungsnetzwerk (WN) für den Nahbereich eines der folgenden ist: WLAN, Bluetooth oder IrDA.

15. System nach einem der Ansprüche 10 bis 14, **dadurch gekennzeichnet, dass** das zweite drahtlose Datenübertragungsnetzwerk (MN) ein mobiles Kommunikationsnetzwerk ist.

16. System nach Anspruch 15, **dadurch gekennzeichnet, dass** das mobile Kommunikationsnetzwerk entweder ein UMTS- oder ein GPRS-Netz werk ist.

17. System nach einem der vorstehenden Ansprüche, **dadurch gekennzeichnet, dass** das zweite drahtlose Datenübertragungsnetzwerk (MN) ein IMS-Netzwerk aufweist.

18. System nach einem der vorstehenden Ansprüche, **dadurch gekennzeichnet, dass** das Terminal eine Einrichtung zum Ausführen einer mobilen Kommunikation aufweist.

## Revendications

1. Procédé de transfert d'un service électronique par le biais d'un premier réseau de transfert de données sans fil (WN) vers un terminal (MT) à l'intérieur d'un deuxième réseau de transfert de données sans fil (MN) et communiquant avec le premier réseau de transfert de données sans fil (WN), **caractérisé en ce que**, dans le procédé :
- des données d'identité d'une station de base (BT) du premier réseau de transfert de données sans fil (WN) sont transmises vers le terminal (MT) ;
- une demande pour un service contenant les données d'identité est envoyée depuis le terminal vers le deuxième réseau de transfert de données sans fil (MN) ;
- une connexion de transfert de données (4, 6) est formée au moyen du deuxième réseau de transfert de données sans fil (MN) à partir d'un serveur (GW) pour un réseau fédérateur (BB) vers le terminal (MT) par le biais du premier réseau de transfert de données sans fil (WN) ;
- un message de test est transféré vers le terminal (MT) par le biais d'une connexion de test temporaire (4) formée à l'intérieur de ladite connexion de transfert de données (6) de façon à assurer la fonctionnalité de la connexion de transfert de données (6), après quoi la connexion de transfert de données (6) ainsi assurée est utilisée pour transférer le service ;
- ladite connexion de transfert de données (6) est employée temporairement afin de transférer le service vers le terminal (MT), après quoi la connexion de transfert de données (6) est fermée.

2. Procédé selon la revendication 1, **caractérisé en ce que** la connexion de transfert de données temporaire (6) est formée sur la base dudit identificateur.

3. Procédé selon la revendication 2, **caractérisé en ce que** ledit identificateur comprend des informations relatives à l'adresse sur le réseau de ladite station de base (BT).

4. Procédé selon l'une quelconque des revendications 1 à 3, **caractérisé en ce que** des informations basées sur une quantité de temps ou de données sont collectées par le biais de la connexion de transfert de données temporaire (6) à des fins de facturation.

5. Procédé selon l'une quelconque des revendications précédentes, **caractérisé en ce que** le premier réseau de transfert de données sans fil (WN) est un réseau de transfert courte distance.

6. Procédé selon la revendication 5, **caractérisé en ce que** le réseau de transfert courte distance est constitué par l'un des réseaux suivants : WLAN, Bluetooth ou IrDA.

7. Procédé selon l'une quelconque des revendications précédentes, **caractérisé en ce que** le deuxième réseau de transfert de données sans fil (MN) est un réseau de communication mobile.

8. Procédé selon la revendication 7, **caractérisé en ce que** le réseau de communication mobile est un réseau UMTS ou GPRS.

9. Procédé selon l'une quelconque des revendications précédentes, **caractérisé en ce que** le deuxième réseau de transfert de données sans fil (MN) comprend un système IMS.

10. Système servant à transférer un service électronique vers un terminal (MT), le système comprenant un premier réseau de transfert de données sans fil (WN), un deuxième réseau de transfert de données sans fil (MN), ainsi qu'un terminal (MT), qui est agencé en connexion (1, 2) avec lesdits premier et deuxième réseaux de transfert de données, **caractérisé en ce que** :
- une station de base (BT) du premier réseau de transfert de données sans fil (WN) est apte à transmettre ses données d'identité vers le terminal (MT) ;
- le terminal (MT) est apte à envoyer une demande pour un service contenant les données d'identité vers le deuxième réseau de transfert de données sans fil (MN), dans lequel :
- le deuxième réseau de transfert de données sans fil (MN) est apte à former une connexion de transfert de données (4, 6) à partir d'un serveur (GW) pour un réseau fédérateur (BB) vers le terminal (MT) par le biais du premier réseau de transfert de données sans fil (WN) ;
- le deuxième réseau de transfert de données sans fil (MN) est configuré pour tester la fonctionnalité de la connexion de transfert de données avant que le service soit transféré vers le terminal (MT) en transférant un message test vers le terminal (MT) par le biais d'une connexion de test temporaire (4) formée à l'intérieur de ladite connexion de transfert de données (6);
- le système est apte à utiliser ladite connexion de transfert de données (6) temporairement dans le but de transférer le service vers le terminal (MT), et de fermer la connexion de transfert de données une fois que le service a été transféré.

11. Système selon la revendication 10, **caractérisé en ce que** ledit identificateur comprend des informations relatives à l'adresse sur le réseau de ladite station de base (BT).

12. Système selon l'une quelconque des revendications 10 ou 11, **caractérisé en ce que** le deuxième réseau de transfert de données (MN) est agencé pour collecter des informations basées sur une quantité de temps ou de données par le biais de la connexion de transfert de données temporaire à des fins de facturation.

13. Système selon l'une quelconque des revendications 10 à 12, **caractérisé en ce que** le premier réseau de transfert de données sans fil (WN) est un réseau de transfert courte distance.

14. Système selon la revendication 13, **caractérisé en ce que** ledit réseau de transfert courte distance (WN) est l'un des réseaux suivants : WLAN, Bluetooth ou IrDA.

15. Système selon l'une quelconque des revendications 10 à 14, **caractérisé en ce que** le deuxième réseau de transfert de données sans fil (MN) est un réseau de communication mobile.

16. Système selon la revendication 15, **caractérisé en ce que** le réseau de communication mobile est un réseau UMTS ou GPRS.

17. Système selon l'une quelconque des revendications précédentes, **caractérisé en ce que** le deuxième réseau de transfert de données sans fil (MN) comprend un système IMS.

18. Système selon l'une quelconque des revendications précédentes, **caractérisé en ce que** le terminal comprend des moyens pour exécuter une communication mobile.
